# EUROPEAN PATENT SPECIFICATION

(11) **EP 2 891 943 B1**
(45) Date of publication and mention of the grant of the patent: **08.08.2018**
(21) Application number: 13861264.3
(22) Date of filing: 29.11.2013
(51) Int. Cl.: G06F 1/18

(54) **COMPUTER CASE INCLUDING SIDE SURFACE PLATE IN WHICH POWER SUPPLY LINE IS INSTALLED**
COMPUTERGEHÄUSE MIT EINER SEITENFLÄCHENPLATTE MIT DARIN INSTALLIERTER STROMLEITUNG
ÉTUI D'ORDINATEUR COMPRENANT UNE PLAQUE DE SURFACE LATÉRALE DANS LAQUELLE EST INSTALLÉE UNE LIGNE D'ALIMENTATION ÉLECTRIQUE

(30) Priority: 06.12.2012 KR 20120011479 U; 20.06.2013 KR 20130071263
(43) Date of publication of application: 08.07.2015
(73) Proprietor: Graea Inc., Ulju-gun, Ulsan 689-872 (KR)
(72) Inventor: JUNG, Hyoung-Min, Ulsan 680-837 (KR)
(74) Representative: Prüfer & Partner mbB Patentanwälte · Rechtsanwälte
(86) International application number: PCT/KR2013/011006
(87) International publication number: WO 2014/088266

(56) References cited:
- KR-B1- 101 018 670
- KR-U- 20080 002 212
- KR-U- 20080 002 213
- US-A1- 2003 024 718
- US-A1- 2006 232 134
- US-A1- 2008 186 666
- US-A1- 2009 174 992
- US-B1- 6 266 247
- US-B1- 7 154 761

## Description

### TECHNICAL FIELD

The present invention relates to a computer case. More particularly, the present invention relates to a computer case provided with a side plate having power supply lines for cleanly arranging wirings located in the internal space of the computer case through a side plate with the power supply line.

### BACKGROUND ART

In general, a computer is constituted by electronic components that include a computer case, a metallic frame that is installed in the internal space of the computer case, a power supply that is fixedly attached to the frame, a main board, a hard disk drive, a CD-ROM drive, a cooling fan, a power / reset switch, a USB terminal, a power lamp and the like.

A number of electronic components are basically connected to the power supply or the main board through a plurality of the power supply wirings to be supplied with a driving voltage, and a data input/output device such as a hard disk drive and a CD-ROM drive is connected to the main board via a data cable, thereby performing input and output of the data.

Various electronic components are mounted on the inside of the computer case, various wirings including all power supply wires are disposed along with the electronic components, but these wirings have caused inconveniences and problems as follows.

In the case of attempting to replace a graphic card, the electronic components mounted on the main board like a LAN card, or various data devices, or in the case of cleaning the interior of the computer, there have been many inconveniences in which various wirings complicatedly disclosed inside the computer block a moving line for replacement and cleaning of the components to make the work complicated and there is a need to check the status of the wirings by opening and closing the computer case on both sides.

Furthermore, there has been a problem in that peripheral wirings connected to various electronic components are frequently touched during replacement or cleaning work for the above-described reason and in this case, the wiring terminals may fall out of the electronic components or make the connected state instable, thereby causing malfunction of the computer.

Furthermore, there has been a problem in that due to an arrangement structure in which bundles of various wirings occupy many spaces inside the computer and cover the main board, the flow of air is blocked, the cooling efficiency of the interior of the computer is lowered, and thus, the main board vulnerable to heat is adversely affected.

In order to solve the aforementioned problems, Korean Patent No. 10-1018670 discloses "computer case with side plates for wiring arrangement".

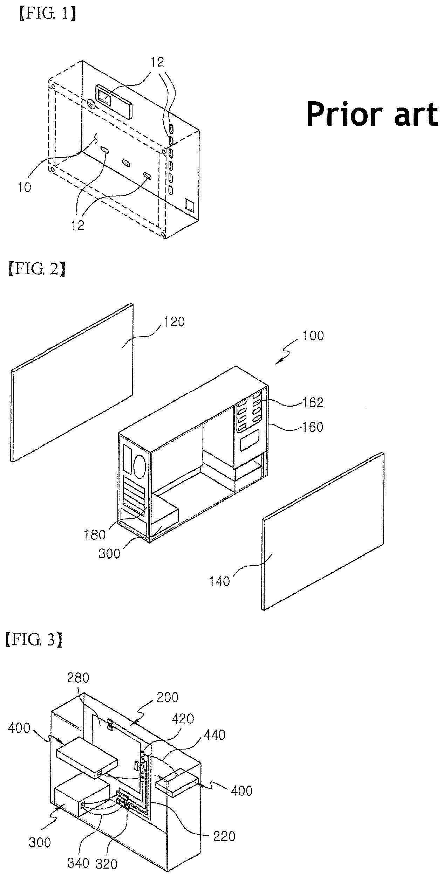

Referring to Fig. 1, a computer case in which a number of electronic components and wirings are disposed is provided with a side plate 10 for wiring arrangement. The side plate 10, on which a main board is mounted, is included on one side thereof and is configured so that the side plate 10 is formed with a plurality of wirings entering and exiting holes 12 passing through a thickness portion 10. The respective wirings are drawn out to the outer surface of the side plate 10 through the wiring entering and exiting holes, and then the wirings are drawn into the inner side surfaces of the side plates through another wiring entering and exiting hole 12 and are connected to the electronic components.

However, in such a case, there is a problem in that, in order to allow the wirings to pass through the wiring entering and exiting holes 12, a user needs to note the arrangement of the electronic components to be installed inside the computer case.

In addition, there is a problem in that an extension cable is required for a position of the wiring entering and exiting holes 12 that do not match the length of the wiring of the power supply.

At the same time, there is a problem in that, in order to replace or repair the power supply, there is a need to remove all the wirings connected to the electronic components, and the removed wirings need to be taken out via the wiring entering and exiting holes 12, thereby significantly lowering the work efficiency.

Document US 2008/0186666 A1 (Chih-Wei Wu) discloses a motherboard installed in a desktop host and including a plurality of first power input connectors for connecting to a plurality of first power output connectors of a power supply of the desktop host. The motherboard further includes a plurality of second power output connectors for connecting to a plurality of second power input connectors of disk drives of the desktop host. The second power output connectors are electrically connected to the first power input connectors through inner circuits of the motherboard.

### DISCLOSURE

### TECHNICAL PROBLEM

The present invention has been made to solve the above-described problems, and an object thereof is to provide power supply lines on a side plate so as to be able to supply the power by being connected to the electronic components within the computer casing, thereby perfectly arranging the power supply wirings.

Furthermore, another object of the present invention is to facilitate the repair and the replacement of the electronic components or the power supply provided inside the computer case, thereby enhancing the work efficiency.

Furthermore, still another object of the present invention is to allow installation of the electronic components manufactured by the respective manufacturers without using a separate extension line when the electronic components do not match the length of the power supply lines in a case where the electronic components having non-uniform sizes, depending on the manufacturers of the electronic components as in the related art, are connected to the power supply, thereby improving the commercial characteristics.

Furthermore, an advantage of the present invention is that, if the side plate is prepared with a transparent material, because the wirings inside the computer case are cleanly arranged, it is possible to check the status of the components inside the computer in real time without opening the computer case, thereby enhancing the aesthetics.

### TECHNICAL SOLUTION

In order to achieve the above and other objects of the present invention, there is provided a computer case provided with a side plate according to the wording of claim 1. The input ports are mounted in a region where the power supply is installed so that the insertion of the power supply ports connected to the power supply is facilitated.

The output ports are mounted in the respective regions where a number of electronic components are installed so as to facilitate the insertion of the electronic component ports.

A cover configured to shield the wirings is provided at a predetermined position inside the computer case.

The cable fasteners are constituted by a body having a plurality of through-holes formed therein so as to be spaced apart by a predetermined distance, and coupling protrusions formed below both sides of the body.

### ADVANTAGEOUS EFFECT

According to an exemplary embodiment of the present invention, there is an effect in which by providing the input and output ports for allowing the input and the output of the power supply and the power supply lines connected thereto on the side plate of the computer case, it is possible to cleanly arrange the wirings that are otherwise complicatedly disposed inside the computer case, thereby preventing the malfunction due to the wirings and improving the cooling efficiency.

Furthermore, there is an effect that facilitates the repair and the replacement of the electronic components or the power supplier provided inside the computer case, thereby enhancing the work efficiency.

Furthermore, there is an effect in which, in a case where attempting to connect the electronic components having the non-uniform sizes, depending on the manufacturers of the electronic components as in the related art, to the power supplier when the electronic components do not match the length of the power supply lines, the electronic components manufactured by the respective manufacturers can be installed without using a separate extension lines, thereby improving the commercial characteristic.

Furthermore, since the wirings inside the computer case are cleanly arranged even if the side plate is prepared with a transparent material, it is possible to check the status of the components inside the computer in real time without opening the computer case, thereby enhancing the aesthetics.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a perspective view illustrating the structure of the side plate of the conventional computer case.
Fig. 2 is a perspective view schematically illustrating a configuration of the computer case provided with side covers according to an exemplary embodiment of the present invention.
Fig. 3 is a perspective view of the computer case provided with the side plate having the power supply lines according to an embodiment of the present invention.
Fig. 4 is a perspective view of the side plate illustrated in Fig. 3.
Fig. 5 is a cross-sectional view illustrating the structure of the power supply ports and the input ports illustrated in Fig. 3.
Fig. 6 is a perspective view of a computer case provided with the side plate having the power supply lines according to another embodiment of the present invention.
Fig. 7 is a perspective view of a computer case provided with the side plate having the power supply lines according to another embodiment of the present invention.

### PREFERRED EMBODIMENTS OF THE INVENTION

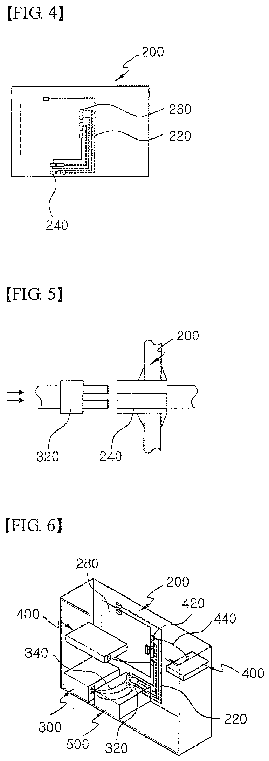

Fig. 2 is a perspective view schematically illustrating a configuration of the computer case provided with side covers 120, 140 according to an exemplary embodiment of the present invention. Fig. 3 is a perspective view of the computer case provided with the side plate having the power supply lines according to an embodiment of the present invention. Fig. 4 is a perspective view of the side plate illustrated in Fig. 3. Fig. 5 is a cross-sectional view illustrating the structure of the power supply ports and the input ports illustrated in Fig. 3. Fig. 6 is a perspective view of a computer case provided with the side plate having the power supply lines according to another embodiment of the present invention.

Here, a computer case 100 according to an exemplary embodiment of the present invention is configured to include a frame, side covers 120 and 140 that are attachably and detachably coupled to both sides of the frame to shield the interior of the computer case 100 from the exterior, and a side plate 200 on one side of which a main board 280 is to be mounted in a replaceable way. A plurality of electronic components 400, a power supply 300 and wirings 340 and 440 are to be disposed in the computer case 100. Furthermore, a front surface of the computer case 100 is provided with a front surface plate 160 in which a hard disk rack 162 to store a hard disk drive and a CD-ROM rack (not illustrated) to store a CD-ROM drive are to be installed, and a rear surface thereof is provided with a rear surface plate 180 to which a cooling fan (not illustrated) and the power supply 300 are to be coupled.

Referring to Figs. 2 to 5, the computer case 100 is provided with the side plate 200 and according to an exemplary embodiment of the present invention, power supply lines 220 are installed on the one side of the side plate 200, input ports 240 are connected to the power supply lines 220 at one end thereof, and output ports 260 are connected to the other end of the power supply lines 220.

Furthermore, the side plate 200 forms an inner side of the computer case 100, and a main board 280 is installed on the one side of the side plate 200. The input ports 240 are mounted on the one side of the side plate 200 and are connected to one end of the power supply lines 220 so that the power supply ports 320 of the power supply 300 are inserted to supply the power to the power supply lines 220.

Such input ports 240 are preferably provided on the side plate 200 at a distance as close as possible to the power supply 300 so that the power supply ports 320 of the power supply 300 are easily inserted and the wirings 340 are prevented from being densely complicated after being inserted.

The output ports 260 are mounted on the one side of the side plate 200 and are connected to the other end of the power supply lines 220 so that the electronic component ports 420 of the electronic components 400 are inserted to supply the power to the electronic components 400.

Such output ports 260 are preferably provided on the side plate 200 at a distance as close as possible to the respective electronic components 400 so that the electronic component ports 420 are easily inserted at the position where a plurality of electronic components 400 are installed, and the wirings 440 are prevented from being densely complicated after being inserted.

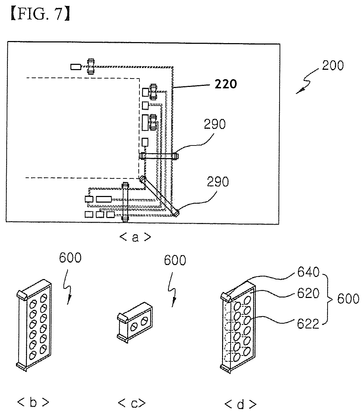

Meanwhile, Fig. 7 is a perspective view of a computer case provided with the side plate 200 having the power supply lines 220 according to another embodiment of the present invention.

The computer case 100 provided with the side plate having the power supply lines according to another embodiment of the present invention illustrated in Fig. 7 is the same as an embodiment of the present invention except that a cable fastener 600 is attachably and detachably coupled to the side plate 200.

Therefore, the repeated descriptions thereof will not be provided.

At least one or more cable fasteners 600 are provided so as to arrange the power supply lines 220 and are attachably and detachably coupled to the side plate 200.

Such a cable fastener 600 is configured to include a body 620 formed with a plurality of through-holes 622 to be spaced apart at a predetermined distance, and coupling protrusions 640 formed below both sides of the body 620 to be caught and coupled to the insertion grooves 290 formed on the side plate 200.

Here, the through-holes 622 are provided with a PVC-based soft material, which facilitates the insertion of the power supply lines 220 inserted into the through-holes 622, and firmly fixes the inserted power supply lines 220.

The through-holes 622 are provided by a multi-layer including a plurality of rows and columns to allow the respective power supply lines 220 inserted into the through-holes 622 to be efficiently distributed and inserted.

Furthermore, the through-holes 622 may also be formed inside the body 620 so as to be sloped.

At the same time, at a predetermined position within the computer case 100 provided with the side plate having the power supply lines according to an embodiment and another embodiment of the present invention, a cover 500 may also be provided so as to be able to shield the wirings 340, and the cover 500 improves the aesthetics of the interior of the computer case 100 by covering the wirings 340 exposed on the side plate 200.

Therefore, the computer case with the side plate having the power supply lines according to an exemplary embodiment of the present invention is able to cleanly arrange the wirings that are otherwise complicatedly disposed within the computer case, by installing the input and output ports on the side plate allowing the output of the power supply and the power supply lines to be connected thereto and thus, there is an effect capable of preventing malfunction due to the wiring and improving the cooling efficiency.

Furthermore, there is an effect that facilitates the repair and the replacement of the electronic components or the power supplier provided inside the computer case, thereby enhancing the work efficiency.

Furthermore, there is an effect in which, in a case of attempting to connect electronic components having non-uniform sizes, depending on the manufacturers of the electronic components as in the related art, to the power supply when the electronic components do not match the length of wirings of the power supply it is possible to install the electronic components manufactured by the respective manufacturers without using a separate extension line, thereby improving the commercial characteristics.

Furthermore, since the wirings within the computer case are cleanly arranged, if the side plate is prepared with a transparent material, it is possible to check the status of the components inside the computer in real time without opening the computer case, thereby enhancing the aesthetics.

### INDUSTRIAL APPLICABILITY

The present invention relates to a computer case, and can be used as a computer case provided with the side plate having the power supply lines for cleanly arranging the wirings located in the internal space of the computer case through the side plate on which the power supply lines are installed.

## Claims

1. A computer case (100) provided with a side plate (200) as a part of the computer case (100) for a main board (280) to be mounted on one side thereof in a replaceable way, in which a plurality of electronic components (400), a power supply (300) and wirings (340, 440) are disposed, the wirings (340, 440) connecting the power supply (300) to power supply ports (320) and the electronic components (400) to electronic component ports (420),
**characterized in that** the computer case (100) further comprises:
power supply lines (220) installed on the one side of the side plate (200) and parallel to the side plate (200);
input ports (240) which are mounted on the one side of the side plate (200) and which are connected to one end of the power supply lines (220) so that the power supply ports (320) can be inserted to supply the power to the power supply lines (220);
output ports (260) which are mounted on the one side of the side plate (200) and which are connected to the other end of the power supply lines (220) so that the electronic component ports (420) can be inserted to supply the power to the electronic components (400); and
at least one or more cable fasteners (600) that are attachably and detachably coupled to the side plate (200) so as to arrange the power supply lines (220).

2. The computer case (100) of claim 1, wherein the input ports (240) are mounted in a region where the power supply (300) is installed so that the insertion of the power supply ports (320) connected to the power supply (300) is facilitated.

3. The computer case (100) of claim 1, wherein the output ports (260) are mounted in the respective regions where the plurality of electronic components (400) are installed so as to facilitate the insertion of the electronic component ports (420).

4. The computer case (100) of claim 1, wherein a cover (500) configured to shield the wirings (340) is provided at a predetermined position inside the computer case (100).

5. The computer case (100) of claim 1, wherein the cable fasteners (600) are constituted by a body (620) having a plurality of through-holes (622) formed therein so as to be spaced apart by a predetermined distance, and coupling protrusions (640) formed below both sides of the body (620).

## Patentansprüche

1. Computergehäuse (100), das versehen ist mit einer Seitenplatte (200) als ein Teil des Computergehäuses (100) für eine Hauptplatine (280), die an einer Seite davon auf austauschbare Weise anzubringen ist, in welcher eine Vielzahl von elektronischen Komponenten (400), eine Stromversorgung (300) und Verdrahtungen (340, 440) angeordnet sind, die Verdrahtungen (340, 440) verbinden die Stromversorgung (300) mit Stromversorgungsanschlüssen (320) und die elektronischen Komponenten (400) mit Anschlüssen für elektronische Komponenten (420),
**dadurch gekennzeichnet, dass** das Computergehäuse (100) ferner umfasst:
Stromversorgungsleitungen (220), die an der einen Seite der Seitenplatte (200) installiert sind, und parallel zu der Seitenplatte (200);
Eingangsanschlüsse (240), die an der einen Seite der Seitenplatte (200) angebracht sind, und welche mit einem Ende der Stromversorgungsleitungen (220) verbunden sind, so dass die Stromversorgungseingänge (320) eingefügt werden können, um den Stromversorgungsleitungen (220) den Strom zuzuführen;
Ausgangsanschlüsse (260), welche an der einen Seite der Seitenplatte (200) angebracht sind, und welche mit dem anderen Ende der Stromversorgungsleitungen (220) verbunden sind, so dass die Anschlüsse der elektronischen Komponenten (420) eingefügt werden können, um den elektronischen Komponenten (400) den Strom zuzuführen; und
mindestens eine oder mehrere Kabelbefestigungen (600), die an der Seitenplatte (200) befestigbar und lösbar gekoppelt sind, um die Stromversorgungsleitungen (220) anzuordnen.

2. Computergehäuse (100) gemäß Anspruch 1, wobei die Eingangsanschlüsse (240) in einem Bereich angebracht sind, wo die Stromversorgung (300) installiert ist, so dass das Einfügen der mit der Stromversorgung (300) verbundenen Stromversorgungsanschlüsse (320) erleichtert ist.

3. Computergehäuse (100) gemäß Anspruch 1, wobei die Ausgangsanschlüsse (260) in den jeweiligen Bereichen angebracht sind, in denen die Mehrzahl der elektronischen Komponenten (400) angebracht sind, um das Einfügen der Anschlüsse der elektronischen Komponenten (420) zu erleichtern.

4. Computergehäuse (100) gemäß Anspruch 1, wobei eine Abdeckung (500), die zum Abschirmen der Verdrahtungen (340) konfiguriert ist, an einer vorbestimmten Position innerhalb des Computergehäuses (100) vorgesehen ist.

5. Computergehäuse (100) gemäß Anspruch 1, wobei die Kabelbefestigungen (600) durch einen Körper (620) mit einer Vielzahl von darin ausgebildeten Durchgangslöchern (622) gebildet sind, um um eine vorbestimmte Distanz beabstandet zu sein, und
Kopplungsvorsprünge (640) unter beiden Seiten des Körpers (620) ausgebildet sind.

## Revendications

1. Étui d'ordinateur (100) doté d'une plaque latérale (200) faisant partie intégrante de l'étui d'ordinateur (100) pour une carte mère (280), à monter sur un côté de celui-ci de manière à pouvoir être remplacée, dans lequel une pluralité de composants électroniques (400), une alimentation électrique (300) et des câblages (340, 440) sont disposés,
les câblages (340, 440) reliant l'alimentation électrique (300) aux ports d'alimentation électrique (320) et les composants électroniques (400) aux ports de composants électroniques (420),
**caractérisé en ce que** l'étui d'ordinateur (100) comprend en outre :
des lignes d'alimentation électrique (220) installées sur l'un côté de la plaque latérale (200) et parallèles à la plaque latérale (200) ;
des ports d'entrée (240) qui sont montés sur l'un côté de la plaque latérale (200) et qui sont reliés à une extrémité des lignes d'alimentation électrique (220) de sorte que les ports d'alimentation électrique (320) puissent être insérés pour fournir l'électricité aux lignes d'alimentation électrique (220) ;
des ports de sortie (260) qui sont montés sur l'un côté de la plaque latérale (200) et qui sont reliés à l'autre extrémité des lignes d'alimentation électrique (220) de sorte que les ports de composants électroniques (420) puissent être insérés pour fournir l'électricité aux composants électroniques (400) ; et
au moins un ou plusieurs serre-câbles (600) qui sont couplés de manière à pouvoir être attachés à la plaque latérale (200) et détachés de celle-ci de manière à agencer les lignes d'alimentation électrique (220).

2. Étui d'ordinateur (100) selon la revendication 1, dans lequel les ports d'entrée (240) sont montés dans une région où l'alimentation électrique (300) est installée de sorte que l'insertion des ports d'alimentation électrique (320) reliés à l'alimentation électrique (300) soit facilitée.

3. Étui d'ordinateur (100) selon la revendication 1, dans lequel les ports de sortie (260) sont montés dans les régions respectives où la pluralité de composants électroniques (400) est installée de manière à faciliter l'insertion des ports de composants électroniques (420).

4. Étui d'ordinateur (100) selon la revendication 1, dans lequel un capot (500) configuré pour protéger les câblages (340) est prévu à une position prédéterminée à l'intérieur de l'étui d'ordinateur (100).

5. Étui d'ordinateur (100) selon la revendication 1, dans lequel les serre-câbles (600) sont constitués d'un corps (620) comportant une pluralité de trous débouchants (622) formés à l'intérieur de manière à être espacés d'une distance prédéterminée, et
des saillies de couplage (640) formées sous les deux côtés du corps (620).
